# EUROPEAN PATENT SPECIFICATION

(11) **EP 1 341 598 B1**
(45) Date of publication and mention of the grant of the patent: **24.05.2006**
(21) Application number: 01995686.1
(22) Date of filing: 30.11.2001
(51) Int. Cl.: B01J 2/00

(54) **PROCESS FOR APPLYING MATERIAL LAYERS TO SHAPED BODIES**
VERFAHREN ZUM AUFBRINGEN VON MATERIALSCHICHTEN AUF FORMKÖRPER
PROCEDE D'APPLICATION DE COUCHES DE MATERIAU SUR DES CORPS MOULES

(30) Priority: 01.12.2000 DE 10059922
(43) Date of publication of application: 10.09.2003
(73) Proprietor: HTE Aktiengesellschaft The High Throughput Experimentation Company, 69123 Heidelberg (DE)
(72) Inventor: SCHUNK, Stephan, Andreas, 69115 Heidelberg (DE); STRASSER, Andreas, 69239 Neckarsteiner (DE)
(74) Representative: Jones Day
(86) International application number: PCT/EP2001/014043
(87) International publication number: WO 2002/043850

(56) References cited:
- EP-A- 0 582 999
- DE-A- 19 623 413
- DE-C- 19 506 692
- US-A- 3 719 516
- US-A- 4 857 359

## Description

The present invention relates to a process for applying at least one material layer to a multiplicity of shaped bodies according to the preamble of independent Claim 1, and an apparatus for carrying out the inventive process as well as a material obtained by the inventive process.

DE 196 23 413 relates to a process for preparing a catalytically active layer on a support core. Precursor materials (for example oxides or hydroxides of catalytically active metal-ions) are filled in a cylindrical vessel containing the support particles. One or more of these vessels are then subjected to a complex, superimposed rotational movement. Thereby, each vessel rotates around its own axis and, currently, two or more of these vessels rotate around the common axis of a rotation platform they are placed upon. EP-A- 0 582999 describes a process for coating shaped bodies using two rotating vessels wherein one precursor of the coating material is added.

Processes for coating three-dimensional bodies are widely used in the field of chemistry and material sciences. Particularly, coating processes of this type are of importance in the production of heterogeneous catalysts. This also applies in particular to supported catalysts. These are widely used because they combine a relatively high degree of dispersion of the active component on a surface with a high degree of thermal stability of the catalytic component. Generally, producing such supported catalysts requires processing operations such as dispersing an active component on a support material which can either be inert or itself catalytically active. Generally, the support material is immersed in a solution or suspension of the active phase or the precursor materials for the active catalyst phase.

Typical processes for coating such support materials are carried out, for example, continuously on a rotating dish arrangement (C. Perego et al. "Catalysis Today", 34 (1997), pp. 281-305; F.F. Le Page in "Preparation of Solid Catalysts" Eds. G. Ertl, H. Knözinger, J. Weitkamp, p. 579, Verlag Chemie, Weinheim, 1999).

A rotating dish is arranged which has a defined wall height and a defined angle relative to the horizontal plane. By spraying shaped bodies placed on the dish, that is to say the support materials (catalyst supports), while simultaneously rotating the dish, the shaped bodies are coated with the active composition and they are calcined when the process is completed. The residence time and the resultant loading of the spheres on the dish can be set via the height of the dish rim and the angle of inclination of the dish. In the case of granulation processes, the size of the resultant granules can be controlled in this manner. In this arrangement, successful coating requires for the coating process a defined shaped body size, since below a certain size the gravitational forces acting on the body are too small with respect to the adhesion of the shaped bodies to the dish owing to the capillary forces in the presence of the liquid distributed on the dish to rotate spheres below a certain size (< 5 mm) on the dish. These processes also share the fact that the rotation takes place only in one plane.

For rapid and economic production of numerous samples of heterogeneous catalysts in high throughput research, it is therefore desirable to be able to avoid a number of preparation steps in the production, for example, of coated supported catalysts. Workup of the dried and heated/cooled precipitate is very time-consuming in each precipitation, coprecipitation or deposition step. Grinding and classifying of the dried cake are very time-intensive steps. Therefore, it would be desirable to provide a process in which precipitation, coprecipitation or deposition is carried out and the resultant suspension is then applied to a substrate, dried and heated/cooled without, as is the case in the above-mentioned processes, restrictions with respect to the amount, that is to say the number of shaped body layers in a vessel, or the motion of the vessel.

This object is achieved by a process for applying at least one material layer to a multiplicity of shaped bodies, which is characterized in that it comprises the following steps:
(1) introduction of at least two shaped bodies into at least two vessels, and
(2) carrying out at least one sequence comprising at least one of each of the following steps:
   2.1. addition of at least two different precursor materials of the material layer to at least two different vessels,
   2.2. moving the vessels for a defined period by applying a force that can be divided into a force vector having three dimensions,
   2.3. physical, chemical or physicochemical aftertreatment of the shaped bodies,
      wherein the shaped bodies are shaped as spheres in the size region from 50 to 500 µm.

Applying a force in three dimensions achieves, in particular the fact that, instead of a dish rotating in two dimensions, the vessel is shaken in all three dimensions, the frequency advantageously being able to be set in such a manner that even significantly smaller shaped bodies, ranging in size from about 50 to 100 µm, can be shaken than in the above-mentioned processes, still with the addition of one or more precursor materials, for example in the form of liquids, dispersions, suspensions, solutions etc., without sticking to one another or to the bottom of the vessel. The average size range of the shaped bodies used is preferably from about 50 µm to 5 mm. Preferably, the shaped bodies are present as shaped body layer which, as required, can be further extended, for example up to three shaped body layers. With respect to the number of vessels, in principle there are no restrictions, provided that there are at least two vessels. There is an upper restriction on their number only owing to the dimensions of the vessels per se and of the device by which the vessels are agitated.

According to the present invention, at least two different precursor materials are distributed over the totality of the vessels. For example two solutions of different precursor materials are distributed over 50 vessels, further preferably, a different precursor material in each case is distributed into each different precursor material in each case is distributed into each vessel, for example 50 solutions of different precursor materials are distributed over 50 vessels.

If the shaped bodies are not porous, the use of low-melting solvents or dispersion media is advantageous, since, for example, viscous waxes, are only distributed very slowly on a shaped body.

The vessel can be a single vessel or else a multiplicity of vessels, which can be set in motion, for example, fixed on a movably mounted plate.

The latter is also termed a "parallelizable arrangement" where two to several thousand, for example 10, 100 or several hundred or thousand vessels can be set in motion simultaneously, so that a high number of shaped bodies can be coated simultaneously.

In a preferred embodiment, the sequence of steps 2.1. to 2.3. is repeated as often as desired, so that on any material layer a further layer can be applied, so that novel polynary materials are obtained. Preferably, shaped bodies of a monomodal size distribution are used, since the shaking process or distribution process of the shaped bodies in the vessel is particularly homogeneous in this case. Preferably, the shaped bodies are shaped as spheres in the size region from 50 to 500 µm.

In an advantageous embodiment, either porous and/or nonporous shaped bodies can be used in the inventive process. Advantageously, nonporous shaped bodies are subjected to a pretreatment to increase their reactive surface area, for example by etching/lye-treating the shaped bodies with acids, alkali metal hydroxide solutions or other solvents so that the surface becomes roughened, to achieve an improved adhesion of the precursor materials to be coated.

In a preferred embodiment, the surface of the shaped bodies is functionalized. Such functionalizations can change the physicochemical properties of the surface of the shaped body. Such properties may be: polarity, acidity, basicity, coating with defined surface species, steric properties, complex-forming properties, electronic and ionic properties and the pore structure. By means of a desired functionalization, for example by applying organic adhesion promoters or compounds which enable improved solubility of the substances applied, as many substances as desired which are as different as desired in their physical properties can be applied to the shaped bodies, for example hydrophobic and hydrophilic substances, lipophilic and lipophobic substances. Suitable processes for this are all processes known to those skilled in the art for functionalizing surfaces, in which case, in particular, the washcoat technique may be mentioned. By this means, for example, by applying a substance, a further substance which is already applied to the surface owing to the functionalization of the surface, can be dissolved out by the given substance or can react with the applied substance and thus more complex precursor compounds can be applied to the shaped body in a simple manner.

A further advantage of the inventive process is that it is a batch process in which the support, that is to say the shaped body, is charged and can be removed when the coating process is complete. The processes underlying the prior art are carried out continuously so that a certain time is always required in order to obtain the process in a steady state.

Preferably, the shaped bodies are subjected to an aftertreatment, preferably dried, in the vessel, before a further coating layer, that is to say material layer, is applied. For example, the drying can be performed in the vessel via radiators, hot-air fans or other heating apparatuses mounted above the vessel, but the vessels can also be heated directly.

Preferably, after each post-treatment step, preferably drying step, the shaped bodies are subjected to a calcination treatment or, at the end of a defined sequence the shaped bodies are subjected to a calcination treatment, so that the layers which have been deposited one on top of the other like the layers of an onion can be reacted with one another and sintered together.

Preferably, the precursor material is present in a fluid medium, since the meter-ability of the application step is then particularly increased. In this case the precursor material can be present in the fluid medium in dissolved form, as suspension, as emulsion, as dispersion or as gel. Aqueous and nonaqueous solvents and dispersion media can be used, for example water, hydrocarbons and their derivatives, such as alkanes, alkenes, aromatics, alcohols, aldehydes, ketones, amines, carboxylic acids, esters, amides, halogenated hydrocarbons, hydrocarbon compounds of sulphur, of phosphorous and mixtures of two or more thereof.

Preferably, solvents are used which have low boiling points in order to make mild evaporation of the solvent possible.

In a further advantageous embodiment, low-melting fluid media, for example solvents/dispersion media, are used. The molten solvent/dispersion medium is applied to the shaped bodies in this case and can then solidify. By applying a plurality of layers via different components present in the solvents/dispersion media, a structure like the layers of an onion is built up. After building up the last material layer, the solvent can be removed by heating/evaporation and the components can then be reacted by calcination.

It is advantageous to use surface-active agents, for example surfactants which are additionally present in the fluid medium in the form of ionic and/or nonionic surfactants. These decrease the surface tension of the fluid medium and thus make uniform coating of the shaped body possible. This is advantageous, in particular, if during the coating process precipitation reactions are carried out directly in which different phases having differing stoichiometries can be formed. This applies in particular to multicomponent reactions, for example coprecipitation of the corresponding metals from cobalt nitrate solutions, bismuth nitrate solutions, with ammonium heptamolybdate solution.

Suitable surfactants in this case can be ionic or nonionic, for example polyethylene glycols, polymethylene glycols and their ethers, Lutensols, hydroxymethyl celluloses, carboxylates, tertiary amines, quaternary ammonium salts, sulphonates and sulphuric esters, so that the surfactants can be adjusted exactly to the appropriate fluid medium, that is to say, for example, to aqueous and/or nonaqueous solvents.

The type of precursor materials is not restricted according to the invention. The precursor materials can be molecular or nonmolecular. Preferably, those which may be mentioned are the following classes of precursor materials which lead to the following materials or already are such materials:

Heterogeneous or heterogenized catalysts, luminophores, electrooptical, superconducting or magnetic substances, or mixtures of two or more thereof; in particular intermetallic compounds, oxides, oxide mixtures, mixed oxides, ionic or covalent compounds of metals and/or nonmetals, metal alloys, ceramics, active carbon, organometallic compounds and composite materials, dielectrics, thermoelectrics, magnetoresistive and magnetooptical materials, organic compounds, polymers, enzymes, pharmaceutical active compounds, substances for foods and food supplements, feeds and feed supplements and cosmetics.

Preferably, the precursor material used is a binder system, in particular an inorganic binder system. The binder system here acts as adhesion promoter for further precursor materials on the shaped body. This is advantageous, in particular, in the case of the presence of metal oxides, and especially for multimetal oxides, since the precursor materials crystallize under reaction conditions and thus form defined phases. This frequently leads to a loss of mechanical stability of the applied precursor compounds, so that the addition of an in particular organic binder makes possible improved adhesion behavior of the precursor materials on the shaped body. Examples of suitable binder systems are aluminium oxides, silicon oxides, aluminas, phyllosilicates, kaolin, titanium dioxides and zirconium dioxides alone or as a mixture of two or more thereof and/or in combination with or without phosphoric acid compounds.

The terms used in the context of the present application will now be explained at this point:
- Movement:: In association with the invention, "movement" means that the vessel to be moved directly or indirectly performs a preferably circular or ellipsoidal rotary movement in the XYZ directions.
- Fluid medium:: A fluid medium is defined as a medium whose flowability is proportional to the expression e-ΔE/RT, where Δ E is the energy which must be overcome for the medium to flow. This includes, for example, liquids, gases, waxes, dispersions, emulsions, sols, gels, fats, suspensions, melts, pulverized solids etc.
- Shaped bodies:: This term in principle comprises all two-dimensional or three-dimensional devices and bodies having a rigid or semirigid surface which can either be flat or else have openings, pores or boreholes or channels. The support body must be suitable for taking up sub- stances. With respect to the external shape of the shaped bodies, there are no restrictions, provided that they are two- or three-dimensional devices or two- or three-dimensional bodies. Thus the shaped body can have the shape of a sheet-form product, for example a film, of a wire-type structure, of a knit or woven, of a sphere or hollow sphere, of an ellipsoidal body, a parallelepiped, a cube, a cylinder, a prism or a tetrahedron.
- Homogeneous particle size distribution (PSD):: Homogeneous PSD is taken to mean that when determining the size distribution of the shaped bodies, the median of the PSD comprises at least 30% of the shaped bodies.
- Force vector:: Force vector in the context of the invention is taken to mean that a continuous or intermittent force sets the vessel indirectly or directly into a preferably circular or ellipsoidal shaking/rotating movement. The vector in the Z direction in this case can also be 0, but preferably the vectors in the X, Y and Z direction are not equal to 0.
- Material:: "Material" is taken to mean preferably non-gaseous substances, for example solids, sols, gels, waxy substances or substance mixtures, dispersions, emulsions, suspensions and solids. These can be molecular and nonmolecular chemical compounds, formulations, mixtures, where the term "nonmolecular" de- fines substances which can be continuously optimized or changed, in contrast to "molecular" substances whose structural expression may only be changed via a variation of discrete states, that is for example the variation of a substitution pattern.
- Material layer:: "Material layer" on a shaped body is taken to mean the fact that the shaped body is either homogeneously or inhomogeneously enclosed by a material whose layer thickness can be set freely.
- Monomodal:: "Monomodal" in the present application is taken to mean the fact that shaped bodies consist of only geometric shape and they have a standard deviation with respect to the median of the size distribution of 30%.
- Porosity:: Bodies have a porosity if they have micropores, mesopores, macropores according to the IUPAC definition or a combination of two or more thereof, in which the pore distribution can be monomodal, bimodal or multimodal. Preferably, the bodies have a multimodal pore distribution having a high proportion, that is to say more than 50%, of macropores. Examples of these are foamed ceramics, metallic foams, metallic or ceramic monoliths, hydrogels, polymers, in particular PU foams, composites, sintered glasses or sintered ceramics. The porosity of such a shaped body generally has a BET surface area of from 1 to 1 000, preferably from 2 to 800, and in particular from 3 to 100 m2/g.
- Precursor material:: "Precursor material" is taken to mean materials, formulations or substances in the above-mentioned sense which only after a chemical and/or physical treatment and/or physicochemical treatments reach their end state, that is to say their reactive end state, or become "material".
- Addition:: "Adding" in the context of the present invention is taken to mean applying or introducing substances either onto the surface, into the pore system or channel system, into the recesses or openings of a shaped body or that they can diffuse into these, in which case application or introduction of substances one above the other, if appropriate interrupted by layers which are introduced or applied by a treatment step, for example a hydrophobizing layer, or in microencapsulated form is possible.

Further advantages and configurations of the invention result from the description and the accompanying drawing.

The invention is shown diagrammatically in the drawing with reference to an exemplary embodiment and is described in detail below with reference to the drawing.

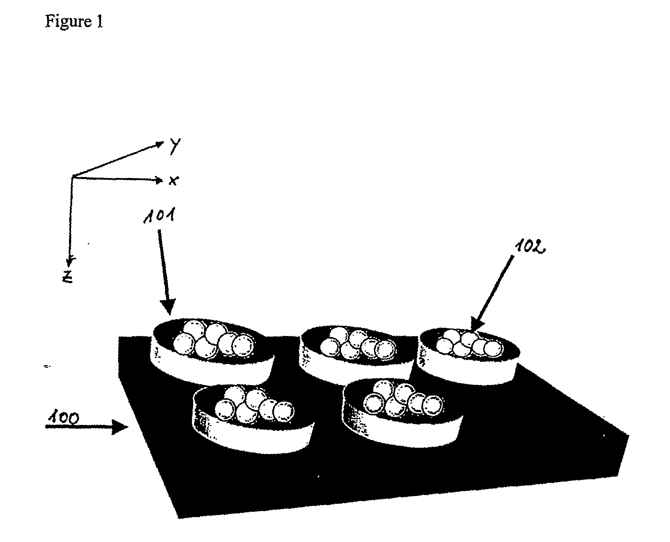

Fig. 1 schematically shows an apparatus for the inventive process.

Fig. 1 shows by way of example in a schematic representation an apparatus for carrying out the inventive process. On a movable plate 100, five vessels 101 are fixed. In the vessels 101 there are situated shaped bodies 102.

The vessels are fixed, for example, via adhesives, adhesive tapes or other mechanical, physical and/or chemical and/or physicochemical attachment and bonding means. Clearly, the embodiment of the plate 100 is not restricted to a rectangle, but the plate 100 can assume any desired geometric shape. The shaped bodies 102 are porous aluminium dioxide spheres having a diameter of from approximately 100 to 500 µm, the median of the particle size distribution being about 150 µm. Obviously, as described above, particle size distributions having a median of, for example, 50 µm or using spheres made of other materials is also possible. Not shown in Fig. 1 is a driver motor which sets in motion, preferably in a circular or ellipsoidal manner, at a defined frequency in the X, Y and Z direction, the plate 100 which is movably fixed onto the said drive motor. Both the period and also the frequency of movement can be adapted according to the requirements of the respective coating process. The shaped bodies 102 form a shaped body layer which covers the bottom of the vessels 101. If required, up to a maximum of three shaped body layers can be present in the vessels 101.

To carry out the inventive process, a precursor material is introduced into the vessels 101 onto the shaped bodies 102. This precursor material can, for example, be present in the form of a liquid, dispersion, suspension or solution. After the precursor material is applied, the plate 100 is shaken or allowed to rotate in the X, Y, Z direction, preferably in a circular or ellipsoidal manner, for a predefined period of time.

After expiry of the predetermined time for the movement, the shaped bodies are dried directly in the vessels, for example by a heating lamp not shown in Fig. 1, which heating lamp is mounted above the movable plate 100. However, it is also possible that heating elements are integrated, for example, into the movable plate 100, or other drying apparatuses known to those skilled in the art are integrated into the inventive apparatus. Obviously, the shaped bodies 102 can also be taken out of the vessels 101 and each then dried separately by means known to those skilled in the art.

The shaped bodies thus dried, on the surfaces of which optionally a further calcination treatment can be performed, which can also lead to a solid-state reaction of the applied substances, are then taken out and analyzed.

The present invention further relates to a material comprising a shaped body and at least one material layer applied thereon in layer form, and a binder system, the binder system preferably being selected from the group consisting of kaolin, aluminium oxide, silicon dioxide and mixtures of two or more thereof.

### Example

The appropriate solids and solutions (iron nitrate [2.9 molar], ammonium heptamolybdate [0.2 molar]) were introduced in 20 ml of 20 per cent strength nitric acid, then kaolin (kaolin HI special [0.752 g], Dorfner) or aluminium oxide (Disperal [0.752 g], Condea) were added and the mixture was stirred for 30 minutes at room temperature at 350 revolutions per minute. 2 ml of the dispersion were applied to each 5 g of steatite spheres (0.5 to 1.5 mm diameter, Cermatec).

The samples were dried for 24 h at 80°C and were brought to 500°C in the course of 2 h under nitrogen and kept at 500°C for 3 h.

The samples had the following stoichiometric composition based on the respective elements:

| Sample | Fe | Mo | Al (kaolin) | Al (aluminium oxide) |
|---|---|---|---|---|
| 1 | 1 | 1 | 0 | 0 |
| 2 | 1 | 1 | 0.2 | 0 |
| 3 | 1 | 1 | 0 | 0.2 |

In total, in each case 5 g were produced based on the total oxide mass.

After calcination, the amount of oxide adhering to the steatite was determined gravimetrically. A mechanical test was then carried out in which the samples were each shaken for 60 seconds at 3 Hz and the adhering amount of oxide was again determined gravimetrically. The percentages reported relate to the amount of oxide present in the 2 ml which was applied to the steatite.

| Sample | Residual oxide | Residual oxide | Residual oxide | Residual oxide |
|---|---|---|---|---|
| | content after | content after | content after sec- | content after third |
| | calcination | first mechanical | ond mechanical test | mechanical test |
| | | test | | |
| 1 | 39% | 37% | 22% | 4% |
| 2 | 43% | 40% | 27% | 7% |
| 3 | 47% | 43% | 28% | 16% |

Samples 2 and 3 containing kaolin and aluminium oxide clearly show the higher residual oxide content.

## Claims

1. Process for applying at least one material layer to a multiplicity of shaped bodies, **characterized in that** it comprises the following steps:
(1) introduction of at least two shaped bodies into at least two vessels; and
(2) carrying out at least one sequence comprising at least one of each of the following steps:
2.1. addition of at least two different precursor materials of the material layer to at least two different vessels,
2.2. moving the vessels for a defined period by applying a force that can be divided into a force vector having three dimensions,
2.3. physical, chemical or physicochemical aftertreatment of the shaped bodies,
wherein the shaped bodies are shaped as spheres in the size region from 50 to 500 µm.

2. Process according to Claim 1, **characterized in that** the sequence comprising steps 2.1 to 2.3 is repeated.

3. Process according to Claim 1 or 2, **characterized in that** the shaped bodies have an essentially homogeneous particle size distribution.

4. Process according to any of Claims 1 to 3, **characterized in that** the shaped bodies are identical.

5. Process according to any of the preceding claims, **characterized in that** the shaped bodies are nonporous and they are subjected to a pretreatment to increase their reactive surface area.

6. Process according to any of the preceding claims, **characterized in that** a physical, chemical or physicochemical aftertreatment, preferably drying, of the shaped bodies is carried out in the respective vessel.

7. Process according to any of the preceding claims, **characterized in that** the precursor material is present in a fluid medium.

8. Process according to Claim 7, **characterized in that** the precursor material is present in the fluid medium in dissolved form and/or as a suspension and/or as a dispersion.

9. Process according to any of the preceding claims, **characterized in that** the precursor material comprises at least one binder system, at least one surface-active substance or a combination of at least one binder system and at least one surface-active substance.

## Patentansprüche

1. Verfahren zum Aufbringen zumindest einer Materialschicht auf eine Vielzahl von Formkörpern **dadurch gekennzeichnet, dass** dieses die folgenden Schritte umfaßt:
(1) Einbringen von wenigstens zwei Formkörpern in mindestens zwei Gefäße; und
(2) Durchführen von zumindest einer Sequenz umfassend zumindest jeweils einen der nachstehenden Schritte:
2.1. Zugabe von zumindest zwei verschiedenen Vorläufermaterialien der Materialschicht in zumindest zwei verschiedene Gefäße,
2.2. Bewegen der Gefäße während eines definierten Zeitraums durch Anlegen einer Kraft, die in einen Kraftvektor mit drei Dimensionen zerlegt werden kann,
2.3. physikalische, chemische oder physikalisch-chemische Nachbehandlung der Formkörper,
wobei die Formkörper als Kugeln im Größenbereich von 50 bis 500 µm ausgeformt sind.

2. Verfahren nach Anspruch 1, **dadurch gekennzeichnet, dass** die Sequenz, umfassend die Schritte 2.1 bis 2.3, wiederholt wird.

3. Verfahren nach einem der Ansprüche 1 oder 2, **dadurch gekennzeichnet, daß** die Formkörper eine essentiell homogene Teilchengrößenverteilung aufweisen.

4. Verfahren nach einem der Ansprüche 1 bis 3, **dadurch gekennzeichnet, dass** die Formkörper identisch sind.

5. Verfahren nach einem der vorhergehenden Ansprüche, **dadurch gekennzeichnet, dass** die Formkörper nicht porös sind und einer Vorbehandlung zur Vergrößerung ihrer reaktiven Oberfläche unterzogen werden.

6. Verfahren nach einem der vorhergehenden Ansprüche, **dadurch gekennzeichnet, daß** eine physikalische, chemische oder physikalisch-chemische Nachbehandlung, vorzugsweise Trocknung, der Formkörper im jeweiligen Gefäß durchgeführt wird.

7. Verfahren nach einem der vorhergehenden Ansprüche, **dadurch gekennzeichnet, dass** das Vorläufermaterial in einem fluiden Medium präsent ist.

8. Verfahren nach Anspruch 7, **dadurch gekennzeichnet, dass** das Vorläufermaterial in dem fluiden Medium in gelöster Form und/oder als Suspension und/oder als Dispersion vorliegt.

9. Verfahren nach einem der vorhergehenden Ansprüche, **dadurch gekennzeichnet, daß** als Vorläufermaterialien Materialien eingesetzt werden, die mindestens ein Bindersystem, mindestens eine oberflächenaktive Substanz oder eine Kombination aus mindestens einem Bindersystem und mindestens einer oberflächenaktiven Substanz umfassen.

## Revendications

1. Procédé pour appliquer au moins une couche d'un matériau sur une multiplicité de corps formés **caractérisé en ce qu'**il comprend les étapes suivantes consistant à :
(1) introduire d'au moins deux corps formés dans au moins deux récipients ; et
(2) mener au moins une séquence comprenant au moins une parmi chacune des étapes suivantes :
2.1 l'ajout d'au moins deux matériaux précurseurs différents de la couche d'un matériau à au moins deux récipients différents,
2.2. le déplacement des récipients pendant une période définie en appliquant une force qui peut être divisée en un vecteur de force ayant trois dimensions,
2.3. un traitement secondaire physique, chimique ou physicochimique des corps formés,
dans lequel, les corps formés sont formés en tant que des sphères, dans la région de tailles allant de 50 à 500 µm.

2. Procédé selon la revendication 1, **caractérisé en ce que** la séquence comprenant les étapes 2.1 à 2.3 est répétée.

3. Procédé selon la revendication 1 ou 2, **caractérisé en ce que** les corps formés ont une répartition granulométrique sensiblement homogène.

4. Procédé selon l'une quelconque des revendications 1 à 3, **caractérisé en ce que** les corps formés sont identiques.

5. Procédé selon l'une quelconque des revendications précédentes, **caractérisé en ce que** les corps formés sont non poreux et **en ce qu'**ils sont soumis à un prétraitement afin d'accroître leur surface réactive.

6. Procédé selon l'une quelconque des revendications précédentes, **caractérisé en ce qu'**un traitement secondaire physique, chimique ou physicochimique, de préférence un séchage, des corps formés est mené dans le récipient respectif.

7. Procédé selon l'une quelconque des revendications précédentes, **caractérisé en ce que** le matériau précurseur est présent dans un milieu fluide.

8. Procédé selon la revendication 7, **caractérisé en ce que** le matériau précurseur est présent dans le milieu fluide sous forme dissoute et/ou en tant qu'une suspension et/ou en tant qu'une dispersion.

9. Procédé selon l'une quelconque des revendications précédentes, **caractérisé en ce que** le matériau précurseur comprend au moins un système de liant, au moins une substance tensioactive ou une combinaison d'au moins un système de liant et d'au moins une substance tensioactive.
